# EUROPEAN PATENT SPECIFICATION

(11) **EP 0 604 936 B1**
(45) Date of publication and mention of the grant of the patent: **21.01.1998**
(21) Application number: 93120920.9
(22) Date of filing: 27.12.1993
(51) Int. Cl.: F02B 77/13

(54) **A shroud for forced cooling and noise-absorbing in an internal combustion engine**
Luftführung für eine Zwangskühlung und eine Schallabsorbierung einer Brennkraftmaschine
Enveloppe pour un refroidissement forcé et une absorption de bruit d'un moteur à combustion interne

(30) Priority: 28.12.1992 JP 92983/92
(43) Date of publication of application: 06.07.1994
(73) Proprietor: HONDA GIKEN KOGYO KABUSHIKI KAISHA, Minato-ku Tokyo (JP)
(72) Inventor: Kuga, Shinji, c/o K.K. HONDA GIJUTSU KENKYUSHO, Wako-shi, Saitama (JP)
(74) Representative: Quinterno, Giuseppe

(56) References cited:
- EP-A- 0 071 914
- FR-A- 2 686 942
- JP-U- 2 096 425

## Description

The present invention relates to a shroud for the intake of cooling air in an air-cooled type internal combustion engine of the kind defined in the preamble of Claim 1.

JP-U-2-96425 discloses an air-cooled internal combustion engine for a scooter type two-wheeled motor vehicle wherein the heat radiating portion of the engine is covered with a shroud and, by rotation of a cooling fan integral with a crank shaft, cooling air is introduced into the shroud through a cooling air intake opening formed in the shroud to cool the heat radiating portion. The shroud for forced cooling has a double wall structure with inner and outer walls, with a noise-absorbing material being interposed between the said inner and outer walls, to improve the noise-absorption.

In such a conventional shroud, however, there is the danger that the noise absorbing material disposed between the inner and outer walls of the shroud may be displaced to one side by vibrations generated in the internal combustion engine or induced by running of the two-wheeled motor vehicle carrying the engine thereon, thus resulting in deterioration of the noise-absorbing effect.

EP-A-0 071 914 discloses an insulating panel structure for automotive vehicles, including two panels and a sheet of insulating material sandwiched therebetween. One panel is provided with a plurality of flanges projecting toward the other panel, for retaining the insulating sheet material in place. Said flanges are formed by burring holes or louvers in one panel.

The present invention aims at providing an improved shroud of the initially defined kind for forced cooling in an internal combustion engine.

This object is achieved according to the invention by a shroud having the features defined in Claim 1.

Since the present invention is constructed as above, the noise generated by the internal combustion engine and that by the cooling fan are absorbed by he noise-absorbing material disposed between the inner and outer wall of the shroud and are intercepted by the shroud. Consequently, there is attained a satisfactory noise-absorbing effect.

According to the present invention, moreover, even when the noise-absorbing material interposed between the inner and outer walls of the shroud tends to be displaced to one side by vibrations generated in the internal combustion engine or induced by running of a two-wheeled motor vehicle carrying the engine thereon, the noise-absorbing material can be held in a uniformly fixed state by means of the engaging lugs formed on one or both of the inner surfaces of the inner and outer walls, and thus the deterioration of the noise-absorbing effect caused by the deviation of the noise-absorbing material can be prevented.

An embodiment of the present invention illustrated in the accompanying drawings will be described hereinunder.

In the drawings:

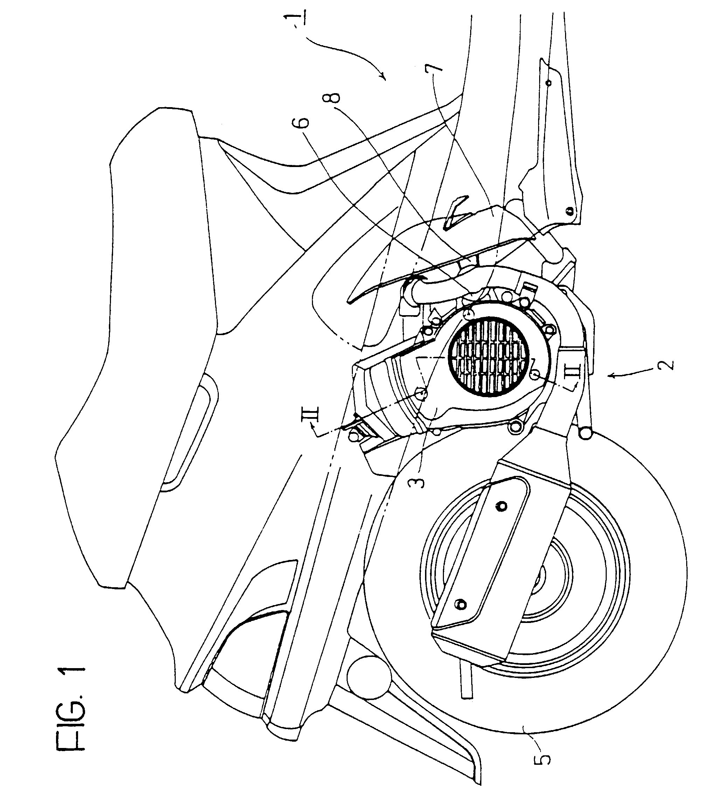

Fig. 1 is a right side view of the rear portion of a scooter type two-wheeled motor vehicle having a shroud according to the present invention;

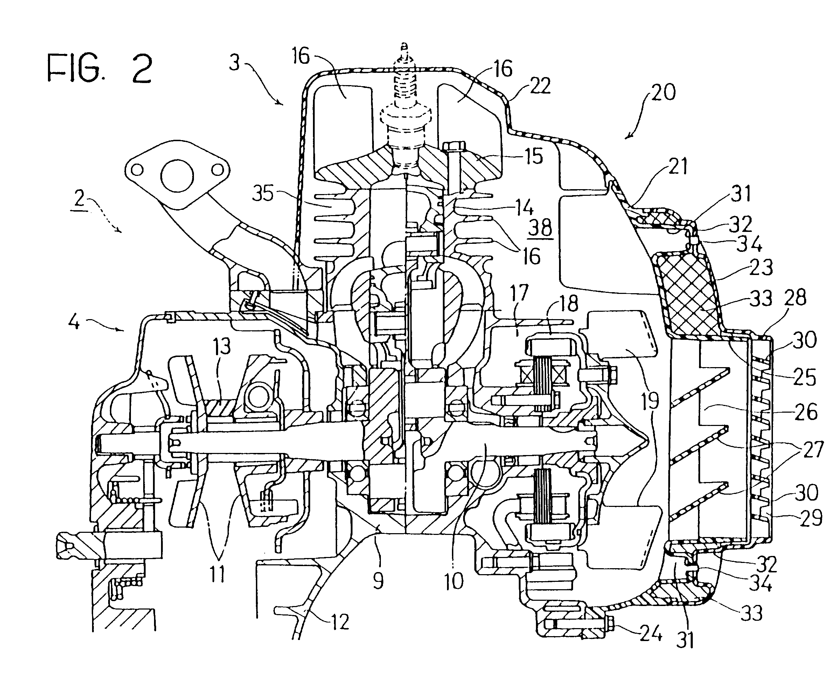

Fig. 2 is a vertical sectional view taken along line II-II in Fig. 1;

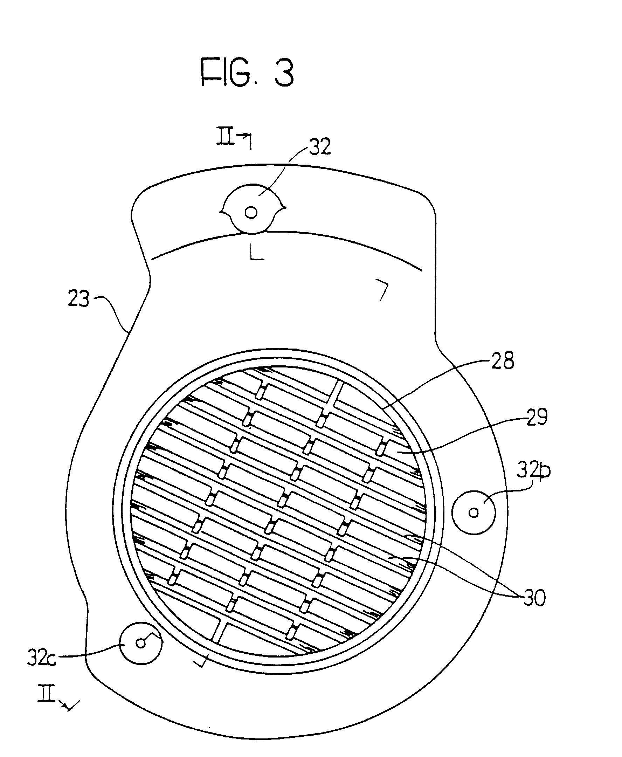

Fig. 3 is an enlarged side view of a shroud outer plate shown in Fig. 1;
Fig. 4 is an enlarged side view of an outside surface of a cylinder-side shroud shown in Fig. 1;
Fig. 5 is a sectional view taken on line V-V in Fig. 4; and
Fig. 6 is a developed plan view of a noise-absorbing material.

A swing type power unit 2 mounted on a scooter type two-wheeled motor vehicle 1 comprises an air-cooled type internal combustion engine 3 standing up in a slightly obliquely, downwardly inclined state and a V belt type stepless (infinitely variable) speed change mechanism 4 extending backward from a lower side of the engine 3, the engine 3 and the speed change mechanism 4 being integrally coupled together. A rear wheel 5 is integrally fitted on an output shaft (not shown) of the V belt type stepless speed change mechanism 4, and a hanger portion 6 positioned in the front portion of the swing type power unit 2 is attached vertically, swingably to a bracket 8 which is projecting backward from a body 7 of the scooter type two-wheeled motor vehicle 1.

A crank shaft 10 is supported rotatable within a crank case 9 of the engine 3, and a driving variable pulley 11 of the stepless speed change mechanism 4 is mounted on the leftmost end of the crank shaft 10. A V belt 13 is entrained around the driving variable pulley 11 and a driven variable pulley (not shown) is journaled in the rear portion of a transmission case 12. With increase in the number of revolutions of the crank shaft 10, the change gear ratio of the stepless speed change mechanism 4 decreases in a stepless manner and the power of the engine 3 is transmitted to the rear wheel 5 through the speed change mechanism 4.

Further, a cylinder 14 located above the crank case 9 and a cylinder head 15 above the cylinder are formed with a large number of radiation fins 16 at predetermined intervals. A rotor 18 of a generator 17 is integrally fitted on the rightmost end of the crank shaft 10, and a centrifugal type cooling fan 19 is integrally mounted on the rotor 18.

The air-cooled type internal combustion engine 3 and the cooling fan 19 are covered with a shroud 20 made (for example) of of a synthetic resin. The shroud 20 comprises a cylinder-side shroud 21 which covers the cooling fan 19 and the cylinder 14 of the engine 3, a head-side shroud 22 which covers the cylinder head 15, and a shroud outer plate 23 which covers the outside of the cylinder-side shroud 21. The cylinder-side shroud 21 and the head-side shroud 22 are mounted to the crank case 9, cylinder 14, etc., removably, with mounting bolts 24.

In the cylinder-side shroud 21 there is formed a cylindrical opening 25 which is concentric with the cooling fan 19, and an inner louver 26 is formed in the cylindrical opening 25. The inner louver 26 comprises wide fins 27 inclined from the rear to the front in the outside direction from the inside and arranged longitudinally at wide intervals. In the shroud 23 there is also formed a side cylindrical opening 28 projecting outwards in close contact with the outer peripheral surface of the cylindrical opening 25 of the cylinder-side shroud 21. Further, an outer louver 29 is formed in the cylindrical opening 28. The outer louver 29 comprises relatively narrow fins 30 inclined from above to below in the outside direction from the inside and arranged vertically at narrow intervals.

The cylinder-side shroud 21 is formed with side mounting seats 31 projecting outwards. The mounting seats 31 are formed one in an upper position and two in lower positions. The shroud outer plate 23 is also formed with inwardly projecting mounting seats 32 in positions corresponding to the positions of the mounting seats 31. A noise-absorbing material 33 such as polyuretane sponge is interposed between the cylinder-side shroud 21 and the shroud outer plate 23 and throughout the whole side face with the exclusion of the cylindrical openings 25 and 28. Rivets 34 are fitted in the mounting seats 31 and 32 to couple the cylinder-side shroud 21 and the shroud outer plate 23 integrally with each other. With rotation of the cooling fan 19, cooling air is introduced into the shroud 20 from the cylindrical opening 28 of the shroud outer plate 23 through the cylindrical opening 25 of the cylinder-side shroud 21. During this period, the cooling air flows to the cylinder head 15 side while in contact with the radiation fins 16 and is thereafter discharged into the atmosphere from a cooling air discharge port 35 formed in a left-hand rear position of the head-side shroud 22.

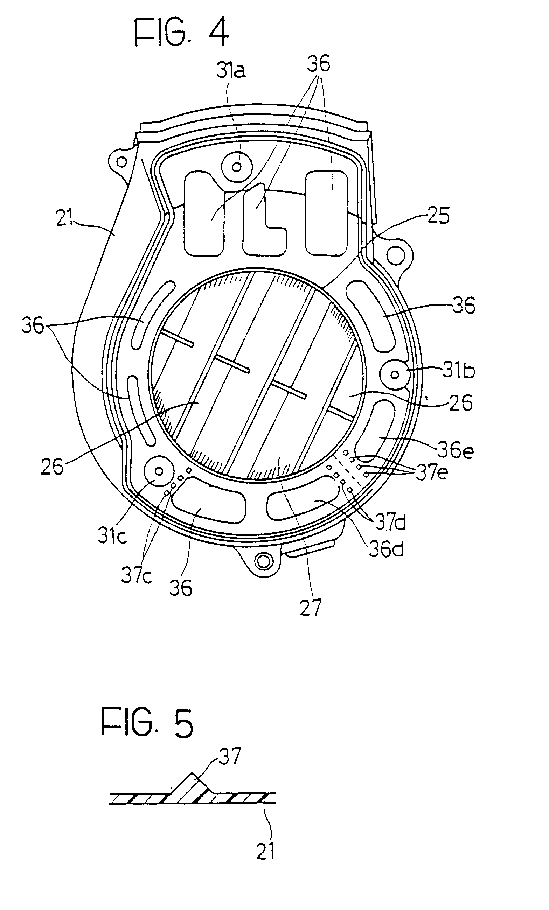

In the cylinder-side shroud 21, as shown in Fig. 4, there are formed many holes 36 in a surrounding relation to the outer periphery of the cylindrical opening 25. The noise-absorbing material 33 is exposed to a cooling air passage 38 through the holes 36.

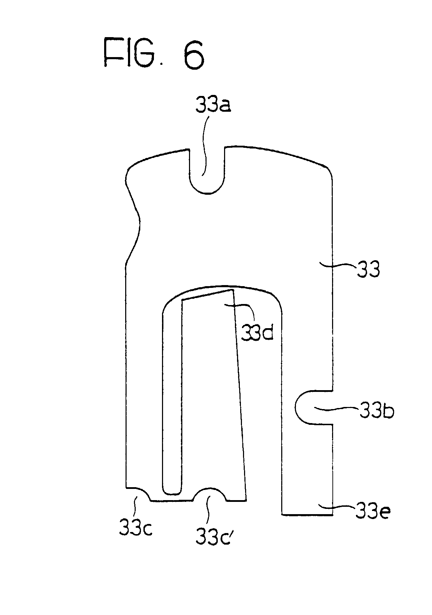

Further, as shown in Fig. 4, on the outer surface of the cylinder-side shroud 21 there are formed quadrangular pyramid-shaped engaging lugs 37c, 37d and 37e, each in a plural number, between holes 36 formed around the cylindrical opening 25 and in three positions corresponding to mating portions 33c, 33d and 33e of the noise-absorbing material 33 which is in the form of a plate as shown in Fig. 6.

Before mounting, the noise-absorbing material 33 is formed in such a planar shape as shown in Fig. 6. A recess 33a of the noise absorbing material 33 is fitted on a mounting seat 31a of the cylinder-side shroud 21 through the cylindrical opening 25, while a recess 33b of the noise-absorbing material is likewise fitted on a mounting seat 31b, the portion between recesses 33c and 33c' of the noise-absorbing material is folded back 180' to join one to the other, and in this state both said recesses are fitted around a mounting seat 31c, allowing both end portions 33d and 33e of the noise-absorbing material 33 to come into engagement with the lugs 37d and 37e, respectively.

Since the illustrated embodiment is constructed as above, when the air-cooled type internal combustion engine 3 starts operating and the cooling fan 19 is rotated, the outside air present on the right-hand side of the swing type power unit 2 is introduced into the cooling air passage 38 in the shroud 20 from the cylindrical opening 28 of the shroud outer plate 23 through the cylindrical opening 25 of the cylinder-side shroud 21, then while being heated by contact with the radiation fins 16 of the cylinder 14 and the cylinder head 15, it is discharged to the outside of the shroud 20 through the cooling air discharge port 35. Thus, the cylinder 14 and the cylinder head 15 are cooled to a satisfactory extent.

Even if noise is generated from the engine 3 and the cooling fan 19 upon operation of the engine, the noise in the cooling air passage 38 is intercepted by the shroud 20 which covers the engine 3 and the cooling fan 19, and is absorbed by the noise-absorbing material 33 exposed into the passage 38 through the holes 36. Consequently, the noise level outside the power unit 2 becomes lower to a remarkable extent.

Moreover, in the cylindrical openings 25 and 28, since the fins 27 of the inner louver 26 and the fins 30 of the outer louver 29 are inclined in directions different from each other, the acoustic waves of noise which have passed between the fins 27 of the inner louver 26 are changed in their travelling direction by the fins 30 of the outer louver 29, so that the noise insulating effect is improved and the level of the noise generated from the engine 3 and the cooling fan 19 can be further reduced.

Further, since the fins 30 of the outer louver 29 are inclined from above to below in the outside direction from the inside, rain water descending from above is allowed to drop to the exterior of the vehicle from the lower edges of the fins 30 and thus it is possible to prevent the entry of rain water into the cooling air passage 38.

Additionally, since the fins 27 of the inner louver 26 are inclined from the rear to the front in the outside direction from the inside, the wind which has flowed from the front toward the rear on the right-hand side of the swing type power unit 2 and passed between the fins 30 of the outer louver 29 can be introduced positively into the cooling air passage 38. Thus, it is possible to increase the flow rate of cooling air and thereby further enhance the cooling effect.

Additionally, since the noise-absorbing material 33 is engaged and fixed by a large number of quadrangular pyramid-shaped engaging lugs 37 formed on the outer surface of the cylinder-side shroud 21 in positions between holes 36 formed therein, even when a unilateral force is exerted on the noise-absorbing material 33 due to vibrations generated with running of the scooter type two-wheeled motor vehicle or vibrations of the internal combustion engine 3, the noise-absorbing material is fixed in its position without displacement and there is no fear that noise may pass through portions free of the noise-absorbing material. Thus, the noise-absorbing effect can be maintained over a long time.

Particularly, since a group of quadrangular pyramid-shaped engaging lugs 37d and 37e are formed correspondingly to both end portions 33d and 33e of the noise-absorbing material 33 and another group of engaging lugs 37c of the same shape are formed in correspondence with the folded, juxtaposed portions 33c, 33c' of the noise-absorbing material, the mating portions 33c, 33c', 33d and 33e of the noise-absorbing material which could be displaced are retained by the quadrangular pyramid-shaped engaging lugs 37c, 37d and 37e, whereby the displacement of the noise-absorbing material 33 can be prevented.

## Claims

1. A shroud (20) for the intake of cooling air in an air-cooled type internal combustion engine (3) wherein a heat radiating portion (15, 16) of the engine (3) is covered with the shroud (20) and, by rotation of a cooling fan (19), cooling air is introduced into the shroud (20) through a cooling air intake opening (25) formed in the shroud (20) to cool said heat radiating portion (15, 16); wherein at least the outer periphery of said cooling air intake opening (25) of the shroud (20) is constructed as a double wall structure (21, 23) of inner and outer walls and a noise-absorbing material (33) is interposed between the inner and outer walls (21, 23) of said double wall structure; the shroud (20) being characterised in that engaging lugs (37) are formed on one or both of the inner surfaces of said inner and outer walls (21, 23), said noise-absorbing material (33) being disposed so as to be engaged and fixed by the engaging lugs (37); said engaging lugs (37) having a substantially pyramidal shape;
the noise-absorbing material (33) extending in an essentially annular chamber defined in said double wall structure (21, 23) and being constituted by an essentially planar element (33) accommodated in said essentially annular chamber and having one end portion (33d) which is joined with the other end portion (33e); engaging lugs (37d, 37e) being provided in positions such as to engage said end portions (33d, 33e) of the noise-absorbing element (33).

2. A shroud according to Claim 1, characterised in that said engaging lugs (37) have the shape of quadrangular pyramids.

3. A shroud according to Claim 1 or Claim 2, characterised in that said noise-absorbing material element (33) is originally formed as a deformable planar element having essentially the shape of a G (fig. 6).

## Patentansprüche

1. Ummantelung (20) zur Aufnahme von Kühlluft in einem Verbrennungsmotor (3) vom luftgekühlten Typ, wobei ein Wärmeabstrahlungsteil (15, 16) des Motors (3) von der Ummantelung (20) umhüllt ist und durch Rotation eines Kühlgebläses (19) Kühlluft in die Ummantelung (20) durch eine in der Ummantelung (20) gebildete Kühlluft-Einlaßöffnung (25) eingebracht wird, um den Wärmeabstrahlungsteil (15, 16) zu kühlen; wobei zumindest der Außenumfang der Kühlluft-Einlaßöffnung (25) der Ummantelung (20) als Doppelwand-Struktur (21, 23) einer Innen- und Außenwand konstruiert ist, und ein schalldämpfendes Material (33) zwischen der Innen- und Außenwand (21, 23) der Doppelwand-Struktur angeordnet ist; welche Ummantelung (20) dadurch gekennzeichnet ist, daß Eingriffsansätze (37) an einer der Innenflächen oder beiden Innenflächen der Innen- und Außenwand (21, 23) gebildet sind, wobei das schalldämpfende Material (33) derart angeordnet ist, daß die Eingriffsansätze (37) damit in Eingriff gelangen und dieses fixieren; welche Eingriffsansätze (37) im wesentlichen eine Pyramidenform aufweisen;
welches schalldämpfende Material (33) sich in einer im wesentlichen ringförmigen Kammer erstreckt, die in der Doppelwand-Struktur (21, 23) definiert ist, und aus einem im wesentlichen ebenen Element (33) besteht, das in der im wesentlichen ringförmigen Kammer aufgenommen ist und einen Endteil (33d) aufweist, der mit dem anderen Endteil (33e) verbunden ist; wobei Eingriffsansätze (37d, 37e) in Positionen vorgesehen sind, um mit den Endteilen (33d, 33e) des schalldämpfenden Elements (33) in Eingriff zu gelangen.

2. Ummantelung nach Anspruch 1, dadurch gekennzeichnet, daß die Eingriffsansätze (37) die Form einer vierseitigen Pyramide aufweisen.

3. Ummantelung nach Anspruch 1 oder Anspruch 2, dadurch gekennzeichnet, daß das schalldämpfende Materialelement (33) ursprünglich als verformbares ebenes Element im wesentlichen mit der Form eines G gebildet ist (Fig.6).

## Revendications

1. Enveloppe (20) pour l'entrée d'air de refroidissement dans un moteur à combustion interne du type à refroidissement par air (3) dans lequel une partie (15, 16) rayonnant la chaleur du moteur (3) est recouverte d'une enveloppe (20) et, par la rotation d'un ventilateur de refroidissement (19), de l'air de refroidissement est introduit dans l'enveloppe (20) à travers une ouverture d'entrée d'air de refroidissement (25) formée dans l'enveloppe (20) pour refroidir ladite partie (15, 16) rayonnant la chaleur ; dans laquelle au moins la périphérie externe de ladite ouverture d'entrée d'air de refroidissement (25) de l'enveloppe (20) est construite sous la forme d'une structure à double paroi (21, 23) ayant des parois interne et externe, et une matière d'absorption de bruit (33) est interposée entre les parois interne et externe (21, 23) de ladite structure à double paroi ; l'enveloppe (20) étant caractérisée en ce que des pattes d'accrochage (37) sont formées sur l'une des surfaces, ou sur les deux surfaces, internes desdites parois interne et externe (21, 23), ladite matière d'absorption de bruit (33) étant disposée de manière à être accrochée et fixée par les pattes d'accrochage (37) ; lesdits pattes d'accrochage (37) ayant une forme sensiblement pyramidale ;
la matière d'absorption de bruit (33) s'étendant dans une chambre essentiellement annulaire définie dans ladite structure à double paroi (21, 23) et étant constituée par un élément essentiellement plan (33) logé dans ladite chambre essentiellement annulaire et ayant une partie d'extrémité (33d) qui est reliée à l'autre partie d'extrémité (33e) ; des pattes d'accrochage (37d, 37e) étant prévues dans des positions telles qu'elles accrochent lesdites parties d'extrémité (33d, 33e) de l'élément d'absorption de bruit (33).

2. Enveloppe selon la revendication 1, caractérisée en ce que lesdites pattes d'accrochage (37) ont la forme de pyramides quadrangulaires.

3. Enveloppe selon la revendication 1 ou la revendication 2, caractérisée en ce que ledit élément de matière d'absorption de bruit (33) est formé à l'origine comme un élément plan déformable présentant essentiellement la forme d'un G (figure 6).
